# EUROPÄISCHE PATENTSCHRIFT

(11) **EP 3 767 513 B1**
(45) Veröffentlichungstag und Bekanntmachung des Hinweises auf die Patenterteilung: **15.09.2021**
(21) Anmeldenummer: 19187009.6
(22) Anmeldetag: 18.07.2019
(51) Int. Cl.: G06F 21/64, H04L 9/32, H04L 29/06

(54) **VERFAHREN ZUR SICHEREN DURCHFÜHRUNG EINER FERNSIGNATUR SOWIE SICHERHEITSSYSTEM**
METHOD FOR SECURE EXECUTION OF A REMOTE SIGNATURE, AND SECURITY SYSTEM
PROCÉDÉ DE MISE EN UVRE SÉCURISÉE D'UNE SIGNATURE À DISTANCE AINSI QUE SYSTÈME DE SÉCURITÉ

(43) Veröffentlichungstag der Anmeldung: 20.01.2021
(73) Patentinhaber: Bank-Verlag GmbH, 50933 Köln (DE)
(72) Erfinder: Kraus, Hans-Peter, 50181 Bedburg (DE); Esser, Alexander, 50859 Köln (DE)
(74) Vertreter: dompatent von Kreisler Selting Werner - Partnerschaft von Patent- und Rechtsanwälten mbB

(56) Entgegenhaltungen:
- EP-A1- 1 921 556
- US-B1- 6 745 327
- US-B1- 6 959 382

## Beschreibung

Die vorliegende Erfindung betrifft ein Verfahren zur sicheren Durchführung einer Fernsignatur eines elektronischen Dokuments sowie ein entsprechendes Sicherheitssystem.

In den vergangenen Jahren hat der elektronische Rechtsverkehr stark an Bedeutung gewonnen. Auch haben sich zuletzt die Möglichkeiten der elektronischen Kommunikation und Durchführung elektronischer Prozesse, z. B. zwischen Bürgern und behördlichen Institution (bei dieser neueren Art der elektronischen Kommunikation wird auch häufig vom E-Government bzw. von der E-Regierung gesprochen) oder zwischen Kunden und Banken/Unternehmen, stetig weiterentwickelt. Bei dieser neueren Art der elektronischen Kommunikation zwischen Bürgern und behördlichen Institution wird auch häufig vom E-Government bzw. von der E-Regierung gesprochen.

In diesem Zusammenhang ist es erforderlich, geeignete Verfahren für die Durchführung einer elektronischen Signatur bereitzustellen, welche die handschriftliche Unterschrift ersetzt, wobei im Rahmen der vorliegenden Erfindung die Ausdrücke "elektronische Signatur" und "digitale Signatur" als Synonyme verwendet werden.

Elektronische Signaturen sind im Allgemeinen bekannt und bedienen sich kryptographischer Verfahren. Insbesondere basieren elektronische Signaturen auf asymmetrischen Verschlüsselungsverfahren, die aus der allgemeinen Kryptographie bekannt sind. Bei asymmetrischen Verschlüsselungsverfahren, die bei digitalen Signaturen zum Einsatz kommen, werden Schlüsselpaare eingesetzt, die sich jeweils aus einem privaten Schlüssel zur Erzeugung der Signatur und einem öffentlichen Schlüssel zur Verifikation der Signatur zusammensetzen.

Bislang wurden hauptsächlich kartenbasierte elektronische Signaturen eingesetzt, bei denen der private Schlüssel eines Benutzers auf einer eigens für ihn bestimmten Signaturkarte gespeichert ist. Zur Durchführung einer elektronischen Signatur muss der Benutzer daher im Besitz der Signaturkarte und eines Kartenlesegerätes sein. Darüber hinaus muss er gegebenenfalls auch noch Kenntnis über ein ihm zugewiesenes Passwort bzw. eine ihm zugewiesene PIN haben.

Während kartenbasierte Signaturverfahren im Allgemeinen als sehr sicher anzusehen sind, sind diese jedoch auch mit einigen Nachteilen verbunden.

So müssen für jeden einzelnen Benutzer eine eigene Signaturkarte und ein entsprechendes Kartenlesegerät bereitgestellt werden. Die Beschaffung und Installation dieser notwendigen Komponenten wird für viele Benutzer als umständlich angesehen. Der Vorgang der Erstellung zahlreicher Signaturkarten und Kartenlesegeräte ist zudem sehr zeit- und kostenaufwändig, und zwar insbesondere dann, wenn ein großer Teil der Bevölkerung am elektronischen Rechtsverkehr teilnehmen möchte. US6745327 zeigt ein Verfahren zur Generierung einer elektronischen Signatur.

Ausgehend von den vorstehend beschriebenen Nachteilen bisher bekannter Verfahren ist es Aufgabe der vorliegenden Erfindung, ein kostengünstiges, effizientes und zudem sicheres Verfahren zur Durchführung einer Signatur eines elektronischen Dokuments sowie ein entsprechendes System bereitzustellen.

Zur Lösung der vorstehend genannten Aufgabe wird ein Verfahren zur sicheren Durchführung einer Fernsignatur eines elektronischen Dokuments vorgeschlagen, wobei das Verfahren die nachfolgenden Schritte aufweist:
- Login eines Benutzers bei einer ersten Netzwerk-Einheit;
- Auswahl eines zu signierenden elektronischen Dokuments;
- Generierung einer ersten Prüfnachricht, sofern zuvor die Identität des Benutzers durch den Login bestätigt werden konnte, wobei die erste Prüfnachricht
   - Identifizierungsdaten des Benutzers,
   - das zu signierende Dokument bzw. einen aus dem zu signierenden Dokument generierten Hashwert, und
   - eine digitale Signatur der ersten Netzwerk-Einheit aufweist;
- Übertragung der ersten Prüfnachricht von der ersten Netzwerk-Einheit zu einer zweiten Netzwerk-Einheit;
- Authentifizierung des Benutzers durch die zweite Netzwerk-Einheit, umfassend die folgenden Schritte:
   - Überprüfung der Authentizität des Benutzers durch die zweite Netzwerk-Einheit;
   - Generierung einer zweiten Prüfnachricht, sofern zuvor die Authentizität des Benutzers durch die zweite Netzwerk-Einheit bestätigt und die digitale Signatur der ersten Netzwerk-Einheit verifiziert werden konnte, wobei die zweite Prüfnachricht Authentifizierungsdaten des Benutzers, die erste Prüfnachricht sowie eine digitale Signatur der zweiten Netzwerk-Einheit aufweist;
- Übertragung der zweiten Prüfnachricht von der zweiten Netzwerk-Einheit zu einer dritten Netzwerk-Einheit;
- Versehen des elektronischen Dokuments mit einer digitalen Signatur des Benutzers, wobei die Signierung des elektronischen Dokuments durch die dritte Netzwerk-Einheit erfolgt, und zwar dann, wenn zuvor die zweite Prüfnachricht durch die dritte Netzwerk-Einheit verifiziert werden konnte, wobei die Verifikation der zweiten Prüfnachricht die folgenden Schritte umfasst:
   - Überprüfung der digitalen Signatur der zweiten Netzwerk-Einheit;
   - Überprüfung der digitalen Signatur der ersten Netzwerk-Einheit.

Das erfindungsgemäße Verfahren bietet dem Benutzer gleich mehrere Vorteile.

Insbesondere ist dabei hervorzuheben, dass sich durch das vorgeschlagene Verfahren die Anschaffung einer Signaturkarte bzw. eines Kartenlesegerätes erübrigt. Somit stellt die vorliegende Erfindung ein Verfahren bereit, mit dem elektronische Dokumente einfach, bequem und kostengünstig signiert werden können.

Darüber hinaus bietet das erfindungsgemäße Verfahren eine besonders hohe Sicherheit. Diese wird durch die besondere Form der Verifikation der Prüfnachrichten gewährleistet. Bei dem erfindungsgemäßen Verfahren erfolgen die einzelnen Schritte zur Durchführung einer Fernsignatur auf verschiedenen Netzwerk-Einheiten. Diese kommunizieren über Prüfnachrichten miteinander, wobei jede der Prüfnachrichten von der entsprechenden Netzwerk-Einheit signiert ist. Durch die Verifikation der einzelnen digitalen Signaturen kann eine Netzwerk-Einheit überprüfen, ob die empfangene Prüfnachricht authentisch und integer ist. Auf diese Weise ist eine Manipulation der relevanten Daten praktisch unmöglich oder zumindest sehr unwahrscheinlich. Bei einem potentiellen Hackerangriff könnte beispielsweise eine Netzwerk-Einheit erkennen, dass die relevanten Daten manipuliert sind, da eine (oder mehrere) der überprüften digitalen Signaturen als ungültig erkannt wird. Insgesamt gewährleistet das erfindungsgemäße Verfahren in vorteilhafter Weise eine sichere Übertragung von Informationen über mehrere Systeme hinweg.

Ferner weist jede Prüfnachricht die vorhergehenden Prüfnachrichten auf, sodass eine verschachtelte Struktur der Prüfnachrichten entsteht. Auf diese Weise können sämtliche vorangegangenen Prozessschritte überprüft werden. So kann beispielsweise die dritte Netzwerk-Einheit überprüfen, ob tatsächlich sämtliche Prozessschritte, die durch die erste Netzwerk-Einheit und die zweite NetzwerkEinheit durchgeführt wurden, korrekt durchgeführt wurden oder ob gegebenenfalls eine Manipulation in einem der Prozessschritte zu beobachten ist.

Des Weiteren bietet das erfindungsgemäße Verfahren den Vorteil, dass sämtliche Prozessschritte in einem zentralen und, bevorzugterweise in sich abgeschlossenen Netzwerk erfolgen und dass sämtliche Informationen, welche die Prozessschritte betreffen, innerhalb des zentralen Netzwerks verwaltet werden. Die Verwaltung der sensiblen Informationen in einem zentralen Netzwerk hat gegenüber der Verwaltung in einem dezentralen Netzwerk den Vorteil, dass sämtliche Netzwerk-Komponenten bzw. Netzwerk-Einheiten gegen Angriffe zentral abgesichert werden können. Anders ausgedrückt kann es im Rahmen der vorliegenden Erfindung gemäß einem bevorzugten Ausführungsbeispiel vorgesehen sein, dass die drei Netzwerk-Einheiten Teil eines zentralen Netzwerkes sind.

Ein weiterer Vorteil des erfindungsgemäßen Verfahrens kann darin gesehen werden, dass die einzelnen, zur Durchführung der Fernsignatur notwendigen Prozessschritte, durch die Verteilung der einzelnen Schritte auf die verschiedenen Netzwerk-Einheiten in verschiedenen Umgebungen durchgeführt werden können. Bei einem solchem modularen Ansatz kann beispielsweise vorgesehen sein, dass die erste Netzwerk-Einheit bei einem Dienstleister eingerichtet ist, der seinen Kunden die Möglichkeit der Fernsignatur bieten möchte, während sich die zweite Netzwerk-Einheit und die dritte NetzwerkEinheit bei einem Vertrauensdiensteanbieter (VDA) befinden. Dabei kann auch vorgesehen sein, dass die Netzwerk-Einheiten, die bei dem Anbieter von Sicherheitsdienstleistungen eingerichtet sind, von diesem Anbieter in besonderer Weise sicherheitstechnisch geschützt sind.

Insgesamt wird durch das erfindungsgemäße Verfahren sichergestellt, dass eine Fernsignatur im Namen des Benutzers nur dann durchgeführt wird, wenn sämtliche hierfür notwendigen Prozessschritte ordnungsgemäß durchgeführt wurden. Insbesondere wird die Fernsignatur nur dann durchgeführt, wenn die Identität und Authentizität des Benutzers nachgewiesen werden konnten.

Gemäß der vorliegenden Erfindung ist der Ausdruck "Fernsignatur" breit auszulegen. Hiermit sind im Rahmen der Erfindung insbesondere digitale Signaturen zu verstehen, die es ermöglichen, über einen Vertrauensdienstanbieter (VDA) eine Signatur zu erzeugen und dadurch ein Dokument elektronisch zu unterschreiben. Dabei kann ein Herkunfts- und Authentizitätsnachweis für ein konkretes Dokument bereitgestellt werden. Im Rahmen der vorliegenden Erfindung ist es ferner als unwesentlich zu erachten, ob der Unterzeichner des Dokuments eine natürliche oder eine juristische Person ist. Insofern sind im Rahmen der vorliegenden Erfindung ausdrücklich auch elektronische Unterschriften juristischer Personen, die mitunter auch als "elektronische Siegel" bzw. "elektronische Fernsiegel" bezeichnet werden, in dem Begriff der "Fernsignatur" im Sinne der vorliegenden Erfindung explizit mit inbegriffen.

Bei dem erfindungsgemäßen Verfahren werden die einzelnen Schritte des Prozesses zur Erzeugung einer digitalen Fernsignatur auf drei einzelnen Netzwerk-Einheiten verteilt. Bei den Netzwerk-Einheiten kann es sich beispielsweise um einzelne Netzwerk-Computer handeln, die miteinander verbunden sind und die miteinander kommunizieren können. Alternativ können die Netzwerk-Einheiten auch als einzelne Teilsysteme innerhalb eines Serversystems ausgeführt sein, die miteinander kommunizieren.

Bei dem erfindungsgemäßen Verfahren kann es vorgesehen sein, dass der Login bzw. die Anmeldung des Benutzers bei der ersten Netzwerk-Einheit über einen Benutzernamen und ein Passwort erfolgt. Dies kann insbesondere über eine Weboberfläche oder eine Smartphone-App erfolgen. Nach erfolgreichem Login des Benutzers kann dieser das zu signierende elektronische Dokument auswählen. Dieses Dokument kann beispielsweise im pdf-Format vorliegen. Dabei kann das zu signierende elektronische Dokument beispielsweise auf der Netzwerk-Einheit hinterlegt sein oder aber auch auf dem Endgerät des Benutzers.

Sofern der Login des Benutzers erfolgreich war, wird eine erste Prüfnachricht erzeugt. Diese Prüfnachricht enthält insbesondere Identifizierungsdaten des Benutzers, wobei Identifizierungsdaten beispielsweise eine ID, den Namen, die Anschrift und/oder das Geburtsdatum des Benutzers sowie einen Benutzernamen umfassen können. Bei der ID kann es sich insbesondere um eine Kombination von Zahlen und/oder Zeichen handeln, durch die der Benutzer identifiziert werden kann. Im Sinne der vorliegenden Erfindung ist der Ausdruck "Identifizierungsdaten" nicht zwingend im Plural zu verstehen. Vielmehr kann es beispielsweise auch vorgesehen sein, dass die Identifizierungsdaten ausschließlich aus einer ID bestehen und keine weiteren Daten enthalten. Auch kann vorgesehen sein, dass die Identifizierungsdaten das Passwort oder einen aus dem Passwort generierten Hashwert enthalten. Darüber hinaus weist die erste Prüfnachricht das zu signierende Dokument oder einen Hashwert, der aus diesem Dokument generiert wurde, auf. Schließlich enthält die erste Prüfnachricht eine digitale Signatur der ersten Netzwerk-Einheit. Bei der Erzeugung der digitalen Signatur der ersten Netzwerk-Einheit wird ein privater Schlüssel der ersten Netzwerk-Einheit verwendet. Insbesondere kann dabei dieser private Schlüssel dazu verwendet werden, einen aus dem digitalen Dokument berechneten Hashwert zu signieren. Der Hashwert wird dabei unter Verwendung einer Hashfunktion bzw. eines Hashverfahrens erzeugt. Beispielsweise können dabei als SHA (englisch für Secure Hash Algorithm) bekannte Funktionen, insbesondere SHA-256, zum Einsatz kommen. Der Empfänger der ersten Prüfnachricht, der über einen zum privaten Schlüssel der ersten Netzwerk-Einheit gehörenden öffentlichen Schlüssel der ersten Netzwerk-Einheit verfügt, kann verifizieren, ob die digitale Signatur der ersten Netzwerk-Einheit, welche in der ersten Prüfnachricht enthalten ist, gültig ist.

Auf diese Weise kann die zweite Netzwerk-Einheit, die im Besitz des öffentlichen Schlüssels der ersten Netzwerk-Einheit ist, verifizieren, ob die durch die erste Netzwerk-Einheit durchgeführten Prozessschritte korrekt erfolgt sind und ob die von der ersten Netzwerk-Einheit in der ersten Prüfnachricht bereitgestellten Informationen authentisch und integer sind.

Anschließend erfolgt bei der zweiten Netzwerk-Einheit die Überprüfung der Authentizität des Benutzers. Dies kann beispielsweise durch eine Zwei-Faktor-Authentifizierung erfolgen, wie nachfolgend noch im Detail beschrieben wird. Sofern die Authentizität des Benutzers durch die zweite Netzwerk-Einheit bestätigt werden konnte, erzeugt die zweite Netzwerk-Einheit eine zweite Prüfnachricht, welche die erste Prüfnachricht und die Authentifizierungsdaten des Benutzers enthält. Zudem umfasst die zweite Prüfnachricht eine digitale Signatur der zweiten Netzwerk-Einheit. Dadurch kann ein Empfänger der zweiten Prüfnachricht verifizieren, ob die zweite Prüfnachricht authentisch und integer ist. Im Anschluss an die Erzeugung der zweiten Prüfnachricht wird diese an die dritte Netzwerk-Einheit übertragen.

Eine weitere, dritte Netzwerk-Einheit ist für die anschließende Durchführung der Fernsignatur zuständig. Der Prozess der Durchführung der elektronischen Fernsignatur wird nur dann durchgeführt, wenn zuvor die zweite Prüfnachricht verifiziert werden konnte. Dabei werden die digitale Signatur der zweiten Netzwerk-Einheit und die digitale Signatur der ersten Netzwerk-Einheit, die beide in der zweiten Prüfnachricht enthalten sind, verifiziert. Nur wenn beide Signaturen gültig sind, wird die Fernsignatur durch die dritte Netzwerk-Einheit durchgeführt.

Auch wenn es vorliegend als besonders vorteilhaft anzusehen ist, dass die erste Prüfnachricht Identifizierungsdaten des Benutzers sowie das zu signierende Dokument bzw. einen aus dem zu signierenden Dokument generierten Hashwert aufweist, kann gemäß einer Ausführungsform des erfindungsgemäßen Verfahrens vorgesehen sein, dass die genannten Identifizierungsdaten des Benutzers sowie das zu signierende Dokument bzw. der aus dem zu signierenden Dokument generierten Hashwert lediglich optional in der ersten Prüfnachricht enthalten sind. Die Sicherheit des erfindungsgemäßen Verfahrens gegenüber den aus dem Stand der Technik bekannten Verfahren ist nämlich bereits dadurch erhöht, dass die beiden Signaturen, die durch die erste Netzwerk-Einheit und die zweite Netzwerk-Einheit generiert wurden, durch die dritte Netzwerk-Einheit verifiziert werden. Auf diese Weise wird durch die vorliegende Erfindung eine vollständige Überprüfung der einzelnen Schritte der Prozesskette gewährleistet.

Ferner kann gemäß einer Ausführungsform des erfindungsgemäßen Verfahrens vorgesehen sein, dass die zweite Prüfnachricht die Authentifizierungsdaten nicht enthält. Entsprechend kann es im Rahmen der vorliegenden Erfindung als optional (aber bevorzugt) angesehen werden, dass die zweite Prüfnachricht die Authentifizierungsdaten enthält.

Gemäß einer Ausführungsform des erfindungsgemäßen Verfahrens kann vorgesehen sein, dass die Verifikation der zweiten Prüfnachricht zusätzlich noch eine Überprüfung der Authentifizierungsdaten des Benutzers umfasst.

Durch die zusätzliche Überprüfung der Authentifizierungsdaten des Benutzers kann die Sicherheit des erfindungsgemäßen Verfahrens weiter erhöht und das Risiko einer Manipulation reduziert werden.

Ferner kann gemäß einer weiteren Ausführungsform des erfindungsgemäßen Verfahrens vorgesehen sein, dass die Verifikation der zweiten Prüfnachricht auch eine Überprüfung der Identifizierungsdaten des Benutzers umfasst. Dadurch wird die Überprüfung der Identifizierungsdaten, welche zuvor durch die erste Netzwerk-Einheit erfolgt ist, durch die dritte Netzwerk-Einheit verifiziert. Auf diese Weise wird ein digitales Vier-Augen-Prinzip hinsichtlich der Überprüfung der Identifizierungsdaten bereitgestellt, welche eine verbesserte Überprüfung der Prozesskette gewährleistet. Insofern kann durch die zusätzliche Überprüfung der Identifizierungsdaten des Benutzers die Sicherheit des erfindungsgemäßen Verfahrens noch weiter erhöht werden.

Gemäß einer bevorzugten Ausführungsform des erfindungsgemäßen Verfahrens kann zudem vorgesehen sein, dass die Verifikation der zweiten Prüfnachricht auch eine Prüfung der Authentifizierungsdaten umfasst. Dadurch wird die Überprüfung der Authentifizierungsdaten, welche zuvor durch die zweite Netzwerk-Einheit erfolgt ist, durch die dritte Netzwerk-Einheit verifiziert. Auf diese Weise wird ein digitales Vier-Augen-Prinzip hinsichtlich der Überprüfung der Authentifizierungsdaten bereitgestellt, wodurch eine verbesserte Überprüfung der Prozesskette gewährleistet wird.

Auch kann gemäß einer bevorzugten Ausführungsform der Erfindung vorgesehen sein, dass sowohl die Authentifizierungsdaten des Benutzers überprüft werden, als auch seine Identifizierungsdaten. Dadurch werden die einzelnen Prozessschritte separat durch die dritte Netzwerk-Einheit geprüft, bevor die Durchführung der Fernsignatur vorgenommen wird. Dies ermöglicht ein besonders sicheres Verfahren, da es der dritten Netzwerk-Einheit auf diese Weise ermöglicht wird, die gesamten Prozesskette zu kontrollieren und zwar nicht nur indirekt durch die Prüfung der Signaturen, sondern auch direkt durch die Verifikation der Identifizierungsdaten und der Authentifizierungsdaten. Anders ausgedrückt, kann also gemäß der bevorzugten Ausführungsform der Erfindung die dritte Netzwerk-Einheit sämtliche vorangegangenen Prozessschritte zusätzlich überprüfen. Dabei kann bevorzugt vorgesehen sein, dass die dritte Netzwerk-Einheit auf sämtliche Daten zugreifen kann, die für die Verifikation der Identifizierungsdaten sowie der Authentifizierungsdaten notwendig sind. Hierdurch ist eine Manipulation der einzelnen Prozessschritte sowie eine fehlerhafte Überprüfung der Identifizierungsdaten durch die erste Netzwerk-Einheit bzw. eine fehlerhafte Überprüfung der Authentifizierungsdaten durch die zweite Netzwerk-Einheit, ohne dass dies durch die dritte NetzwerkEinheit erkannt wird, praktisch unmöglich.

Gemäß einer weiteren Ausführungsform des erfindungsgemäßen Verfahrens kann vorgesehen sein, dass die Verifikation der zweiten Prüfnachricht zusätzlich noch einen Schritt zur Überprüfung der Integrität des zu signierenden Dokuments aufweist.

Hierzu kann vorgesehen sein, dass aus dem zu signierenden elektronischen Dokument ein Hashwert berechnet wird und die dritte Netzwerk-Einheit unter Verwendung des öffentlichen Schlüssels der zweiten Netzwerk-Einheit die digitale Signatur der zweiten Netzwerk-Einheit prüft und mit dem Hashwert vergleicht. Sofern der entschlüsselte Wert und der Hashwert identisch sind, ist davon auszugehen, dass das zu signierende Dokument integer ist. Bei dem Hashwert kann es vorgesehen sein, dass dieser durch die dritte NetzwerkEinheit errechnet wird. In diesem Fall kann vorgesehen sein, dass das zu signierende elektronische Dokument von der ersten Netzwerk-Einheit über die zweite Netzwerk-Einheit an die dritte Netzwerk-Einheit übertragen wird. Alternativ hierzu kann es auch vorgesehen sein, dass nicht das gesamte zu signierende Dokument von der ersten Netzwerk-Einheit über die zweite Netzwerk-Einheit an die dritte Netzwerk-Einheit übertragen wird, sondern dass lediglich der aus dem zu signierenden Dokument durch die erste NetzwerkEinheit berechnete Hashwert über die zweite Netzwerk-Einheit an die dritte Netzwerk-Einheit übertragen wird. In diesem Fall braucht die dritte NetzwerkEinheit den Hashwert nicht selbst zu berechnen, sondern vergleicht diesen Hashwert mit der entschlüsselten Signatur der zweiten Netzwerk-Einheit.

Gemäß einer weiteren Ausführungsform des erfindungsgemäßen Verfahrens, kann vorgesehen sein, dass die erste, die zweite und/oder die dritte NetzwerkEinheit ein Hardware-Sicherheitsmodul (HSM) aufweisen, wobei bevorzugt sämtliche durch die erste, zweite und/oder die dritte Netzwerk-Einheit durchgeführten Verfahrensschritte innerhalb des Hardware-Sicherheitsmodul (HSM) ausgeführt werden. Insbesondere kann vorgesehen sein, dass die zweite Netzwerk-Einheit und/oder die dritte Netzwerkeinheit das Hardware-Sicherheitsmodul aufweisen. So können die sicherheitskritischeren Schritte der Prozesskette besonders geschützt werden.

Durch die Verwendung eines Hardware-Sicherheitsmoduls kann die Sicherheit des erfindungsgemäßen Verfahrens weiter erhöht werden. Dabei können die während des erfindungsgemäßen Verfahrens durchlaufenen Prozessschritte gegen Angriffe geschützt werden. Auch können durch die Verwendung von Hardware-Sicherheitsmodulen die Schlüssel, die den einzelnen NetzwerkEinheiten für Verifikation der Signaturen zur Verfügung stehen müssen, geschützt werden.

Auch kann gemäß einer Ausführungsform des erfindungsgemäßen Verfahrens vorgesehen sein, dass die Überprüfung der Authentizität des Benutzers durch die zweite Netzwerk-Einheit auf Grundlage einer Multi-Faktor-Authentifizierung, insbesondere auf Grundlage einer Zwei-Faktor-Authentifizierung, erfolgt.

Bei der Multi-Faktor-Authentifizierung wird eine Kombination von mehreren Berechtigungsnachweisen für die Prüfung der Authentizität eines Benutzers verwendet. Dadurch kann die Sicherheit bei der Authentifizierung des Benutzers weiter erhöht werden. Im Vergleich zu Authentifizierungsverfahren, bei denen nur ein Berechtigungsnachweis erforderlich ist (beispielsweise bei Verfahren, bei denen lediglich ein Benutzername und ein Passwort erforderlich ist), wird bei dem erfindungsgemäßen Verfahren durch den Einsatz der Multi-Faktor-Authentifizierung der Identitätsdiebstahl wesentlich erschwert. Besonders bevorzugt ist eine Überprüfung der Authentizität auf Grundlage einer Zwei-Faktor-Authentifizierung (im Englischen auch bekannt als SCA - Strong Customer Authentication). Bei der Zwei-Faktor-Authentifizierung ist es vorgesehen, dass der Benutzer zwei unabhängige Berechtigungsnachweise erbringt, die auf einen Besitz, ein Wissen oder eine Inhärenz beruhen können. Dabei kann es beispielsweise erforderlich sein, dass der Benutzer einerseits über ein geheimes Wissen (beispielsweise ein bestimmter Benutzername und ein dazugehöriges Passwort) verfügen und andererseits im Besitz eines bestimmten Gegenstandes (beispielsweise ein Smartphone) sein muss. Dabei ist davon auszugehen, dass der Benutzername und das dazugehörige Passwort lediglich dem Benutzer bekannt sind. Ferner kann der Besitz des Smartphones dadurch überprüft werden, dass beispielsweise eine Transaktionsnummer (TAN) per SMS an das Smartphone gesendet wird und der Benutzer anschließend diese TAN über eine Webseite eingeben muss. Alternativ kann die TAN auch mittels eines photoTAN-Verfahrens generiert werden, wobei der Benutzer einen in der Regel farbigen Barcode mit seinem Smartphone auslesen muss, damit ihm die TAN für den Authentifizierungsvorgang angezeigt wird.

Gemäß einer weiteren Ausführungsform des erfindungsgemäßen Verfahrens kann zudem vorgesehen sein, dass die erste Netzwerk-Einheit und die zweite Netzwerk-Einheit voneinander verschieden sind und dass sich der für die digitale Signatur der ersten Netzwerk-Einheit verwendete private Schlüssel von dem für die digitale Signatur der zweiten Netzwerk-Einheit verwendeten privaten Schlüssel unterscheidet.

Des Weiteren kann vorgesehen sein, dass mehrere der Netzwerk-Einheiten eine gemeinsame Netzwerk-Einheit bilden. Beispielsweise kann vorgesehen sein, dass die zweite Netzwerk-Einheit und die dritte Netzwerk-Einheit als eine integrale Netzwerk-Einheit ausgeführt sind. Auch kann vorgesehen sein, dass die erste Netzwerk-Einheit, die zweite Netzwerk-Einheit und die dritte NetzwerkEinheit als ein integrales System bzw. eine integrale Netzwerk-Einheit ausgeführt sind.

Ferner kann gemäß der Erfindung vorgesehen sein, dass die erste Prüfnachricht und/oder die zweite Prüfnachricht ein digitales Zertifikat aufweisen, wobei es sich bei dem digitalen Zertifikat insbesondere um ein digitales public-key-Zertifikat handelt.

In dem jeweiligen digitalen Zertifikat kann beispielsweise der einer NetzwerkEinheit zugeordnete öffentliche Schlüssel enthalten sein, der dazu verwendet wird, die Signatur der Netzwerk-Einheit zu verifizieren. Alternativ zur Verwendung digitaler Zertifikate kann aber auch im Rahmen der vorliegenden Erfindung vorgesehen sein, dass die öffentlichen Schlüssel auf eine andere Art und Weise zwischen den einzelnen Netzwerk-Einheiten ausgetauscht werden. Die Verwendung digitaler Zertifikate für den Austausch der öffentlichen Schlüssel ist also explizit nicht zwingend erforderlich. Auch kann vorgesehen sein, dass die öffentlichen Schlüssel in einer von allen Netzwerk-Einheiten zugänglichen und insbesondere kryptographisch geschützten Datenbank hinterlegt sind, sodass jede Netzwerk-Einheit zur Verifikation einer Prüfnachricht bzw. einer darin enthaltenen Signatur auf sämtliche der benötigten Schlüssel zugreifen kann.

Auch kann gemäß einer weiteren Ausführungsform des erfindungsgemäßen Verfahrens vorgesehen sein, dass das digitale Zertifikat Informationen zum Aussteller des Zertifikats, eine Prüfnachricht-ID und/oder eine Hashfunktion aufweist.

Gemäß einer weiteren bevorzugten Ausführungsform der Erfindung kann vorgesehen sein, dass mindestens die erste Prüfnachricht und/oder die zweite Prüfnachricht einen Zeitstempel aufweist und dass bevorzugt die Verifikation der ersten und/oder der zweiten Prüfnachricht eine Überprüfung des Zeitstempels umfasst.

Dadurch können insbesondere Replay-Angriffe vermieden werden. Beispielsweise kann dabei vorgesehen sein, dass bei der Überprüfung des Zeitstempels nur diejenigen Prüfnachrichten als gültig klassifiziert werden, die innerhalb der letzten 30, 15 oder 5 Minuten erzeugt wurden. Hierzu wird also die Differenz aus der aktuellen Zeit und dem im Zeitstempel enthaltenen Zeitangabe ermittelt. Sofern diese eine vorgegebene Grenze überschreitet, wird die Prüfnachricht als ungültig klassifiziert.

Ferner wird zur Lösung der vorstehend genannten Aufgabe ein Sicherheitssystem umfassend mindestens eine erste Netzwerk-Einheit, eine zweite Netzwerk-Einheit und eine dritte Netzwerk-Einheit vorgeschlagen, mit jeweils einem Prozessor, einem Speicherelement und einem Netzwerkmodul zum Aufbau einer Netzwerkverbindung zwischen der ersten Netzwerk-Einheit, der zweiten Netzwerk-Einheit und der dritten Netzwerk-Einheit. Bei diesem Sicherheitssystem ist vorgesehen, dass der Prozessor der ersten NetzwerkEinheit dazu ausgelegt ist,
- eine erste Prüfnachricht zu generieren, wobei die erste Prüfnachricht Identifizierungsdaten des Benutzers, das zu signierende Dokument bzw. einen aus dem zu signierenden Dokument generierten Hashwert, und eine digitale Signatur der ersten Netzwerk-Einheit aufweist;
- die erste Prüfnachricht unter Verwendung des Netzwerkmoduls von der ersten Netzwerk-Einheit zu der zweiten Netzwerk-Einheit zu übertragen; und
   der Prozessor der zweiten Netzwerk-Einheit dazu ausgelegt ist,
- den Benutzer zu authentifizieren, wobei die Authentifizierung die folgenden Schritte umfasst:
   - Überprüfung der Authentizität des Benutzers;
   - Generierung einer zweiten Prüfnachricht, sofern zuvor die Authentizität des Benutzers durch die zweite Netzwerk-Einheit bestätigt und die digitale Signatur der ersten Netzwerk-Einheit verifiziert werden konnte, wobei die zweite Prüfnachricht Authentifizierungsdaten des Benutzers, die erste Prüfnachricht sowie eine digitale Signatur der zweiten Netzwerk-Einheit aufweist; und
      der Prozessor der dritten Netzwerk-Einheit dazu ausgelegt ist,
- das elektronische Dokument mit einer digitalen Signatur des Benutzers zu versehen, wobei die Signierung des elektronischen Dokuments nur dann erfolgt, wenn zuvor die zweite Prüfnachricht durch die dritte NetzwerkEinheit verifiziert werden konnte, wobei die Verifikation der zweiten Prüfnachricht die folgenden Schritte umfasst:
   - Überprüfung der digitalen Signatur der zweiten Netzwerk-Einheit;
   - Überprüfung der digitalen Signatur der ersten Netzwerk-Einheit.

Im Rahmen der vorliegenden Erfindung wird es als selbstverständlich angesehen, dass das erfindungsgemäße Sicherheitssystem sämtliche der Merkmale aufweisen kann, die vorstehend im Zusammenhang mit dem erfindungsgemäßen Verfahren beschrieben wurden.

Insbesondere kann gemäß dem erfindungsgemäßen Sicherheitssystem vorgesehen sein, dass die Verifikation der zweiten Prüfnachricht zusätzlich noch eine Überprüfung der Authentifizierungsdaten des Benutzers umfasst.

Gemäß einer weiteren bevorzugten Ausführungsform des erfindungsgemäßen Sicherheitssystems kann zudem vorgesehen sein, dass die Verifikation der zweiten Prüfnachricht auch eine Überprüfung der Identifizierungsdaten des Benutzers umfasst.

Alternativ kann vorgesehen sein, dass die erste Netzwerk-Einheit, die zweite Netzwerk-Einheit und/oder die dritte Netzwerk-Einheit ein Hardware-Sicherheitsmodul (HSM) aufweist, wobei bevorzugt sämtliche durch die erste, zweite und/oder die dritte Netzwerk-Einheit durchgeführten Verfahrensschritte innerhalb des Hardware-Sicherheitsmoduls (HSM) ausgeführt werden. Schließlich wird zur Lösung der vorstehend genannten Aufgabe ein Verfahren zur sicheren Generierung eines digitalen Zertifikats vorgeschlagen, wobei das Verfahren die nachfolgenden Schritte aufweist:
- Login eines Benutzers bei einer ersten Netzwerk-Einheit;
- Generierung einer ersten Prüfnachricht, sofern zuvor die Identität des Benutzers bestätigt werden konnte, wobei die erste Prüfnachricht Identifizierungsdaten des Benutzers und eine digitale Signatur der ersten Netzwerk-Einheit aufweist;
- Übertragung der ersten Prüfnachricht von der ersten Netzwerk-Einheit zu einer zweiten Netzwerk-Einheit; und
- Authentifizierung des Benutzers durch die zweite Netzwerk-Einheit, umfassend die folgenden Schritte:
   - Überprüfung der Authentizität des Benutzers durch die zweite Netzwerk-Einheit;
   - Generierung einer zweiten Prüfnachricht durch die zweite NetzwerkEinheit, sofern zuvor die Authentizität des Benutzers durch die zweite Netzwerk-Einheit bestätigt und die digitale Signatur der ersten Netzwerk-Einheit verifiziert werden konnte, wobei die zweite Prüfnachricht Authentifizierungsdaten des Benutzers, die erste Prüfnachricht sowie eine digitale Signatur der zweiten Netzwerk-Einheit aufweist;
- Übertragung der zweiten Prüfnachricht von der zweiten Netzwerk-Einheit zu einer dritten Netzwerk-Einheit;
- Generierung eines Schlüsselpaars, das einen privaten und einen öffentlichen Schlüssel aufweist, durch die dritte Netzwerk-Einheit für die digitale Signatur von elektronischen Dokumenten, und zwar dann, wenn zuvor die zweite Prüfnachricht durch die dritte Netzwerk-Einheit verifiziert werden konnte, wobei die Verifikation der zweiten Prüfnachricht die folgenden Schritte umfasst:
   - Überprüfung der digitalen Signatur der zweiten Netzwerk-Einheit;
   - Überprüfung der digitalen Signatur der ersten Netzwerk-Einheit; sowie
- Generierung einer dritten Prüfnachricht durch die dritte Netzwerk-Einheit, wobei die dritte Prüfnachricht den öffentlichen Schlüssel, die zweite Prüfnachricht und eine Signatur der dritten Netzwerk-Einheit aufweist; und
- Übertragung der dritten Prüfnachricht von der dritten Netzwerk-Einheit zu einer vierten Netzwerk-Einheit;
- Ausstellung eines digitalen Zertifikats für den Benutzer durch die vierte Netzwerk-Einheit, sofern zuvor die dritte Prüfnachricht durch die vierte Netzwerk-Einheit verifiziert werden konnte, wobei die Verifikation der dritten Prüfnachricht die Überprüfung der digitalen Signaturen der ersten, der zweiten und der dritten Netzwerk-Einheit umfasst.

Das Verfahren zur Generierung eines digitalen Zertifikats kann verwendet werden, um einen Benutzer in einem Sicherheitssystem zu registrieren. Bei der Registrierung wird ein Schlüsselpaar, das aus einem geheimen und einem öffentlichen Schlüssel bestehen kann, generiert, der dem Benutzer zugeordnet wird und der verwendet wird, um die Signatur im Namen des Benutzers vorzunehmen. Das digitale Zertifikat für den Benutzer wird durch die vierte Netzwerk-Einheit nur dann ausgestellt, wenn zuvor sämtliche Prozessschritte korrekt durchgeführt wurden. Die Korrektheit der einzelnen Prozessschritte wird durch die Verifizierung der digitalen Signaturen der ersten, der zweiten und der dritten Netzwerk-Einheit überprüft.

Ferner kann bei dem erfindungsgemäßen Verfahren zur Generierung des digitalen Zertifikats vorgesehen sein, dass die Verifikation der dritten Prüfnachricht zusätzlich noch eine Überprüfung der Authentifizierungsdaten des Benutzers umfasst.

Auch kann vorgesehen sein, dass die Verifikation der dritten Prüfnachricht eine Überprüfung der Identifizierungsdaten des Benutzers beinhaltet.

Im Rahmen der vorliegenden Offenbarung wird es als selbstverständlich angesehen, dass die Verfahrensschritte, die im Zusammenhang mit dem erfindungsgemäßen Verfahren zur sicheren Durchführung einer Fernsignatur beschrieben wurden, auch beim erfindungsgemäßen Verfahren zur Generierung eines digitalen Zertifikats verwendet werden können.

Insbesondere kann dabei gemäß einer bevorzugten Ausführungsform des erfindungsgemäßen Verfahrens zur Generierung eines digitalen Zertifikats vorgesehen sein, dass die Verifikation der zweiten Prüfnachricht zusätzlich noch eine Überprüfung der Authentifizierungsdaten des Benutzers umfasst.

Ferner kann vorgesehen sein, dass bei dem erfindungsgemäßen Verfahren zur Generierung eines digitalen Zertifikats die Verifikation der zweiten Prüfnachricht auch eine Überprüfung der Identifizierungsdaten des Benutzers umfasst.

Die Erfindung wird nachfolgend anhand von Ausführungsbeispielen und unter Bezugnahme auf die Zeichnungen näher erläutert. Im Einzelnen zeigen dabei:
- Fig. 1: eine schematische Darstellung des erfindungsgemäßen Verfahrens,
- Fig. 2: eine schematische Darstellung eines ersten Ausführungsbeispiels des erfindungsgemäßen Verfahrens,
- Fig. 3: eine schematische Darstellung einer ersten Prüfnachricht gemäß dem ersten Ausführungsbeispiel,
- Fig. 4: eine schematische Darstellung einer zweiten Prüfnachricht gemäß dem ersten Ausführungsbeispiel, wobei die zweite Prüfnachricht die erste Prüfnachricht beinhaltet,
- Fig. 5: eine schematische Darstellung eines zweiten Ausführungsbeispiels des erfindungsgemäßen Verfahrens,
- Fig. 6: eine schematische Darstellung einer dritten Prüfnachricht gemäß einem zweiten Ausführungsbeispiel,
- Fig. 7: ein Flussdiagramm zur Beschreibung des ersten Ausführungsbeispiels des erfindungsgemäßen Verfahrens und
- Fig. 8: ein Flussdiagramm zur Beschreibung des zweiten Ausführungsbeispiels des erfindungsgemäßen Verfahrens.

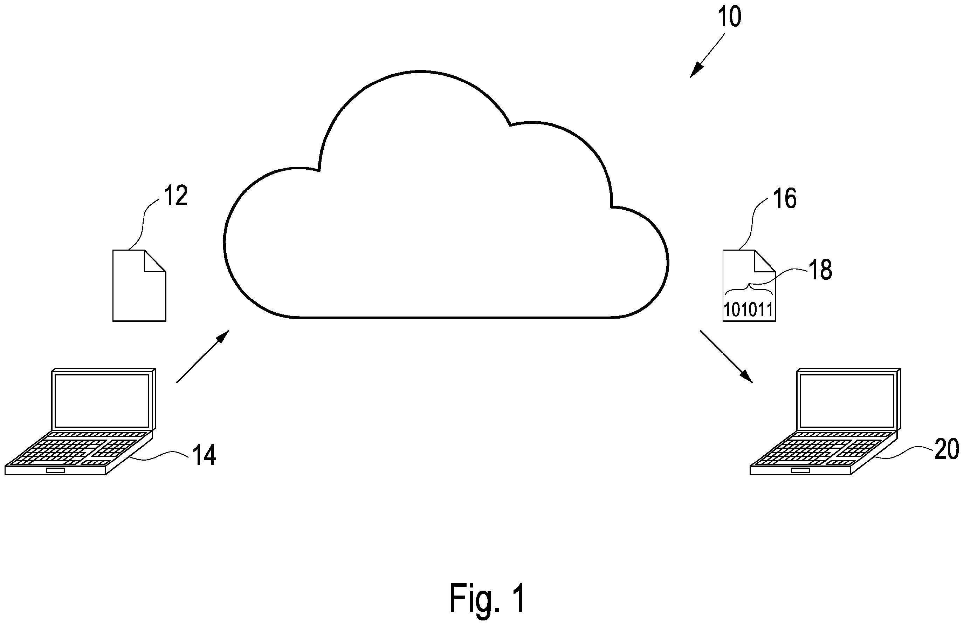

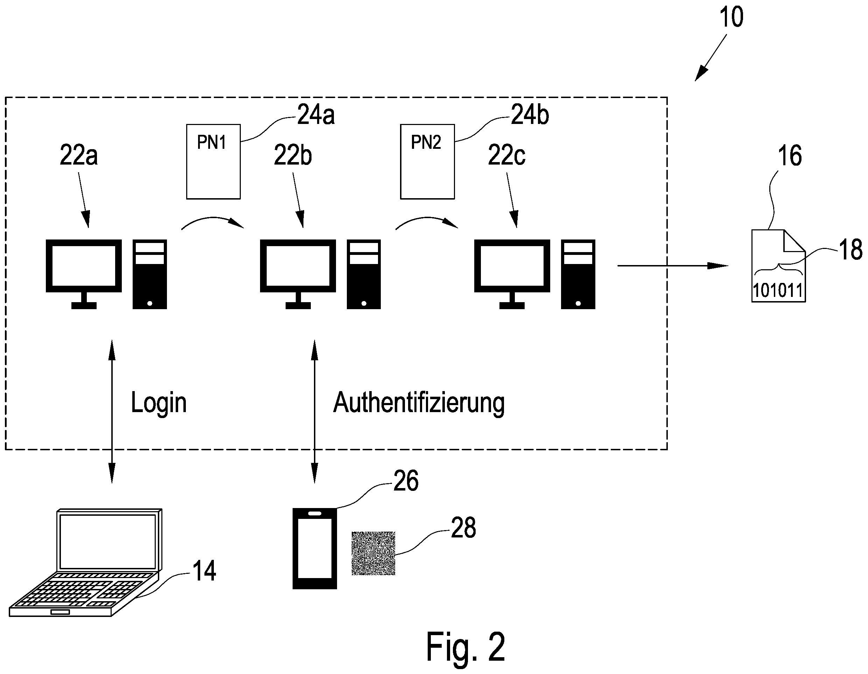

In der Fig. 1 ist eine schematische Darstellung des erfindungsgemäßen Verfahrens dargestellt. Ein zentrales Element ist dabei das Sicherheitssystem 10, innerhalb dessen die sichere Durchführung einer Fernsignatur eines zu signierenden elektronischen Dokuments 12 vorgenommen wird. Bei dem erfindungsgemäßen Verfahren kann ein Benutzer beispielsweise über seinen Computer 14 das zu signierende elektronische Dokument 12 auswählen und an das Sicherheitssystem 10 übertragen. Das elektronische Dokument 12 kann dabei beispielsweise auf dem Computer 14 des Benutzers abgelegt oder in dem Sicherheitssystem 10 hinterlegt sein. Alternativ kann auch vorgesehen sein, dass das zu signierende Dokument 12 auf einer Webseite oder über eine mobile App zur Verfügung gestellt wird, sodass der Benutzer dieses Dokument 12 auswählen und an das Sicherheitssystem 10 übertragen kann. Das Sicherheitssystem 10 führt anschließend für den Benutzer die Signatur durch. Die Durchführung der Fernsignatur erfolgt, nachdem bestimmte Sicherheitsvorkehrungen vorgenommen sind, wie später im Zusammenhang mit den Fign. 2 bis 8 erläutert wird. Das Sicherheitssystem 10 generiert also ein signiertes Dokument 16, das eine digitale Signatur 18 des Benutzers enthält. Das signierte Dokumente 16 kann anschließend an den Computer 20 eines Vertragspartners des Benutzers übertragen werden. Auf diese Weise kann ein elektronisches Rechtsgeschäft durchgeführt werden, ohne dass der Benutzer eine eigene Signaturkarte oder ein Kartenlesegerät benötigt. Alternativ kann auch vorgesehen sein, dass das signierte Dokument 16 an den Benutzer zugestellt wird oder im Sicherheitssystem 10 verbleibt.

In der Fig. 2 ist die prinzipielle Funktionsweise des erfindungsgemäßen Verfahrens gemäß einem ersten Ausführungsbeispiel dargestellt. Wie in dieser Abbildung gezeigt, setzt sich das Sicherheitssystem 10 aus drei NetzwerkEinheiten 22a, 22b, 22c zusammen, die als separate Netzwerk-Computer ausgeführt sein können. Jedes der Netzwerkeinheiten 22a, 22b, 22c ist dabei für einen der drei Prozessschritte, die für die Durchführung der Fernsignatur notwendig sind, zuständig. Bei dem dargestellten Ausführungsbeispiel werden insgesamt zwei Prüfnachrichten 24a, 24b von der jeweiligen Netzwerk-Einheit 22a, 22b erzeugt und von jeweils einer Netzwerk-Einheit 22b, 22c geprüft. Damit das Sicherheitssystem 10 eine elektronische Signatur eines zu signierenden Dokuments 12 vornimmt, ist es notwendig, dass sich der Benutzer, beispielsweise über seinen Computer 14, bei der ersten Netzwerk-Einheit 22a anmeldet. Dies erfolgt üblicherweise über einen Benutzernamen und ein Passwort. Die Identifizierungsdaten werden durch die erste Netzwerk-Einheit 22a geprüft. Nach einer erfolgreichen Anmeldung des Benutzers bei der ersten Netzwerk-Einheit 22a wählt der Benutzer ein zu signierendes Dokument 12 aus. Wie bereits vorstehend erläutert, kann sich das zu signierende Dokument 12 beispielsweise auf dem Computer 14 des Benutzers oder innerhalb des Sicherheitssystems 10 befinden. Die erste Netzwerk-Einheit 22a prüft die Identifizierungsdaten des Benutzers und generiert eine erste Prüfnachricht 24a. Die Prüfnachricht 24a ist mit einer digitalen Signatur 18 versehen. Die Prüfnachricht 24a wird anschließend an die zweite Netzwerk-Einheit 22b übermittelt, die für die Authentifizierung des Benutzers zuständig ist. Insbesondere kann die zweite Netzwerk-Einheit 22b die Integrität und Authentizität der ersten Prüfnachricht 24a kontrollieren.

Gemäß dem in der Fig. 2 dargestellten Ausführungsbeispiel kann die Authentifizierung des Benutzers über sein Smartphone 26 erfolgen. Hierzu wird dem Benutzer beispielsweise ein Barcode 28 angezeigt, den dieser durch die Kamera seines Smartphones 26 aufnehmen muss, um dadurch zu beweisen, dass er im Besitz dieses Endgeräts ist. Nachdem der Benutzer den Barcode 28 eingelesen hat, wird ihm beispielsweise auf seinem Smartphone 26 eine TAN angezeigt, die er anschließend auf Abfrage eingeben muss. Sofern die TAN gültig ist, kann die Authentifizierung des Benutzers als erfolgreich angesehen werden. Bei erfolgreicher Authentifizierung des Benutzers erzeugt die zweite NetzwerkEinheit 22b eine zweite Prüfnachricht 24b und übermittelt diese an die dritte Netzwerk-Einheit 22c, die für die Durchführung der Signatur zuständig ist. Da auch die zweite Prüfnachricht 24b mit einer digitalen Signatur versehen ist, kann die dritte Netzwerk-Einheit 22c die Authentizität und Integrität der zweiten Prüfnachricht 24b kontrollieren. Zudem kann die dritte Netzwerk-Einheit 22c die Signatur der ersten Prüfnachricht 24a verifizieren, da die erste Prüfnachricht 24a (und damit auch die Signatur der ersten Netzwerk-Einheit 22a) vollständig in der zweiten Prüfnachricht 24b enthalten ist. Sofern die Netzwerk-Einheit 22c feststellt, dass die zweite Prüfnachricht 24b und die erste Prüfnachricht 24a unverfälscht sind, erzeugt sie das signierte Dokument 16, welches mit der digitalen Signatur 18 des Benutzers versehen ist. Auf diese Weise sind die einzelnen Prozessschritte gegen mögliche Manipulationsangriffe geschützt, da sich die einzelnen Netzwerk-Einheiten 22a, 22b, 22c untereinander kontrollieren können und da insbesondere das letzte Glied in der Kette (die dritte NetzwerkEinheit 22c) sämtliche vorhergehenden Prozessschritte überprüfen kann.

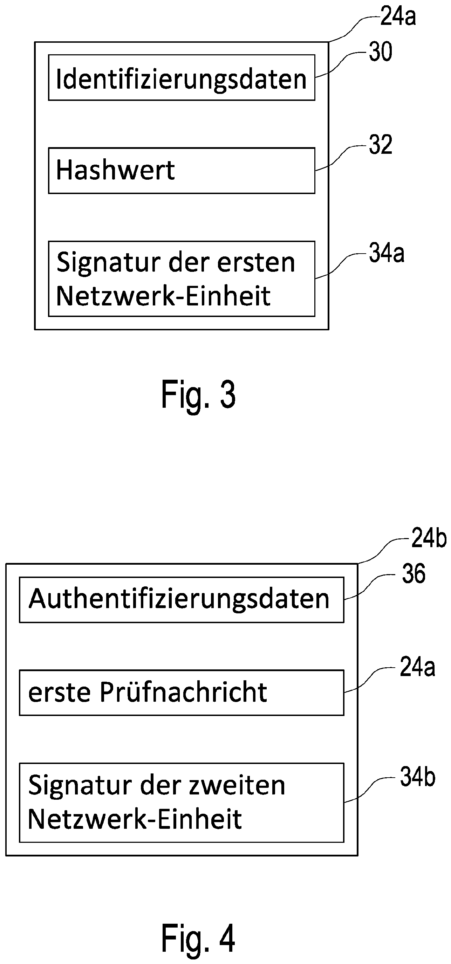

In der Fig. 3 ist der schematische Aufbau der ersten Prüfnachricht 24a gemäß dem ersten Ausführungsbeispiel des erfindungsgemäßen Verfahrens abgebildet. Wie in der Fig. 3 gezeigt, enthält die erste Prüfnachricht 24a Identifizierungsdaten 30, einen Hashwert 32 des zu signierenden Dokuments 12 sowie eine Signatur 34a der ersten Netzwerk-Einheit 24a. Alternativ zu der Darstellung in der Fig. 3 kann auch vorgesehen sein, dass die erste Prüfnachricht 24a anstatt des Hashwertes 32 das vollständige zu signierende Dokument 12 enthält. Die Identifizierungsdaten 30 können beispielsweise einen Benutzernamen und ein dem Benutzernamen zugeordnetes Kennwort enthalten. Auch kann es vorgesehen sein, dass das Kennwort nicht uncodiert in den Identifizierungsdaten 30 enthalten ist, sondern lediglich in Form eines aus dem Kennwort generierten Hashwertes. Ferner kann es vorgesehen sein, dass die Identifizierungsdaten 30 lediglich eine ID enthalten, durch die der Benutzer eindeutig identifiziert werden kann. Die Authentifizierungsdaten können beispielsweise einen Barcode oder die in dem Barcode enthaltenen Informationen und eine dazugehörige TAN enthalten. Die Authentifizierungsdaten können alternativ Bestätigungsdaten bzw. Bestätigungsinformationen aufweisen. Gemäß einer Ausführungsform kann vorgesehen sein, dass die Authentifizierungsdaten einen Flag aufweisen, der beispielsweise auf den Wert "1" gesetzt werden kann, sofern die Authentifizierung des Benutzers erfolgreich war und auf den Wert "0" gesetzt werden kann, sofern die Authentifizierung des Benutzers gescheitert ist. Die Signatur 34a kann aus der Prüfnachricht 24a berechnet werden, indem die übrigen Daten der Prüfnachricht 24a unter Verwendung eines Hash-Algorithmus (beispielsweise SHA-256) gehasht und der auf diese Weise ermittelte Hashwert mit dem privaten Schlüssel der ersten Netzwerken-Einheit verschlüsselt wird.

Des Weiteren ist in der Fig. 4 ein schematischer Aufbau der zweiten Prüfnachricht 24b gemäß dem ersten Ausführungsbeispiel der vorliegenden Erfindung dargestellt. Die zweite Prüfnachricht 24b weist dabei die Identifizierungsdaten 30, die erste Prüfnachricht 24a sowie eine Signatur 34b der zweiten Netzwerk-Einheit 24b auf. Wie in der Fig. 4 dargestellt, sind die Prüfnachrichten ineinander verschachtelt. Anders ausgedrückt, enthält die zweite Prüfnachricht 24b den vollständigen in der ersten Prüfnachricht 24a enthaltenen Datensatz, sodass der Empfänger der zweiten Prüfnachricht 24b nicht nur die Signatur 34b der zweiten Netzwerk-Einheit 24b überprüfen kann, sondern auch zugleich die Signatur 34a der ersten Netzwerk-Einheit 24a.

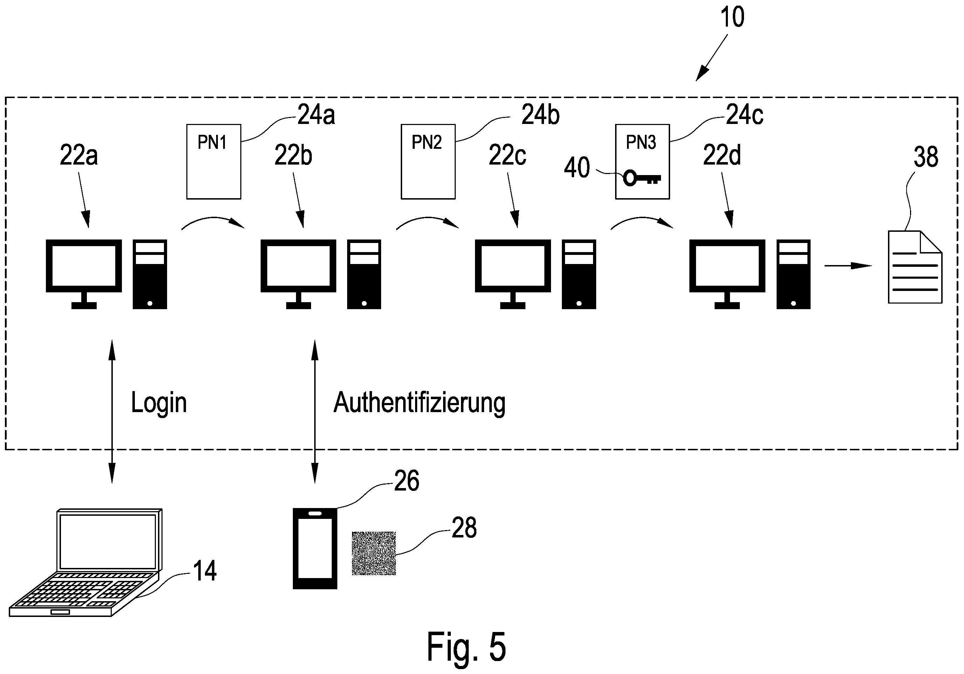

In der Fig. 5 ist ein zweites Ausführungsbeispiel gemäß dem erfindungsgemäßen Verfahren dargestellt. In diesem Ausführungsbeispiel setzt sich das Sicherheitssystem 10 aus insgesamt vier Netzwerk-Einheiten 22a, 22b, 22c, 22d zusammen. Dabei folgen die Schritte der Benutzeranmeldung bei der ersten Netzwerk-Einheit 22a sowie der Benutzer-Authentifizierung durch die zweite Netzwerk-Einheit 22b in ähnlicher Weise wie bei dem in der Fig. 2 dargestellten ersten Ausführungsbeispiel. Im Gegensatz zum ersten Ausführungsbeispiel ist in dem in der Fig. 5 dargestellten zweiten Ausführungsbeispiel die dritte Netzwerk-Einheit 22c für die Erzeugung 40 des Schlüsselpaares verantwortlich, dessen geheimer Teil (privater Schlüssel) später für die Durchführung der elektronischen Signatur des zu signierenden Dokuments 12 benötigt wird. Die Erzeugung des Signaturschlüsselpaars erfolgt nur dann, wenn zuvor die Authentifizierung des Benutzers durch die zweite Netzwerk-Einheit 22b erfolgreich war, was mittels Prüfung der zweiten Prüfnachricht 24b durch die dritte Netzwerk-Einheit 22c verifiziert wird. Nachdem das Signaturschlüsselpaar durch die dritte Netzwerk-Einheit 22c erzeugt wurde, generiert die dritte Netzwerk-Einheit 22c eine dritte Prüfnachricht 24c, die den öffentlichen Signaturschlüssel 40 und eine digitale Signatur 34c der dritten Netzwerk-Einheit 22c enthält. Die dritte Prüfnachricht 24c wird anschließend an die vierte Netzwerk-Einheit 22d übermittelt, die diese Prüfnachricht 24c bzw. die darin enthaltene Signatur 34c verifiziert. Sofern die dritte Prüfnachricht 24c durch die vierte Netzwerk-Einheit 22d verifiziert werden konnte, stellt die vierte Netzwerk-Einheit 22d ein digitales Zertifikat 38 für den Benutzer aus. Dabei hat die vierte Netzwerk-Einheit 22d die Möglichkeit, sämtliche digitalen Signaturen 34a, 34b, 34c der ersten Netzwerk-Einheit 22a, der zweiten Netzwerk-Einheit 22b und der dritten Netzwerk-Einheit 22c zu überprüfen. Auf diese Weise erfolgt die Ausstellung des digitalen Zertifikat 38 nur dann, wenn sämtliche Prozessschritte in der gesamten Prozesskette korrekt durchgeführt wurden.

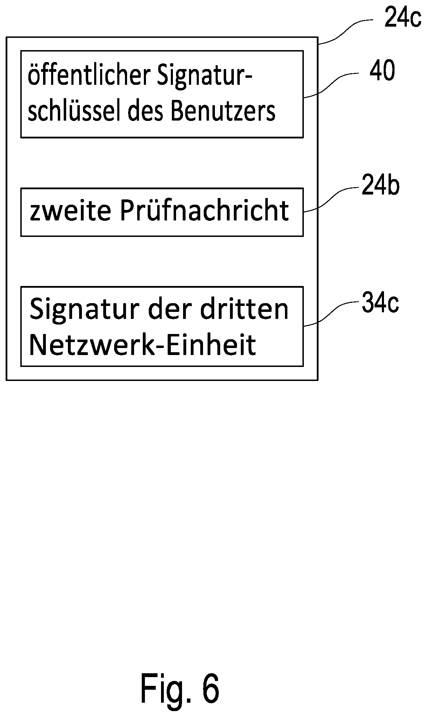

In der Fig. 6 ist der Aufbau der dritten Prüfnachricht 24c gemäß dem in der Fig. 5 dargestellten zweiten Ausführungsbeispiel gezeigt. Die dritte Prüfnachricht 24c enthält dabei den durch die dritte Netzwerk-Einheit 22c erzeugten öffentlichen Signaturschlüssel 40, die zweite Prüfnachricht 24b, welche die erste Prüfnachricht 24a vollständig enthält, sowie eine Signatur 34c der dritten Netzwerk-Einheit 22c. Auch in dieser Fig. ist der verschachtelte Aufbau der Prüfnachrichten erkennbar. Wie bereits erläutert, ermöglicht die Verschachtelung der Prüfnachrichten eine besonders sichere Prüfung der einzelnen Schritte in der Prozesskette.

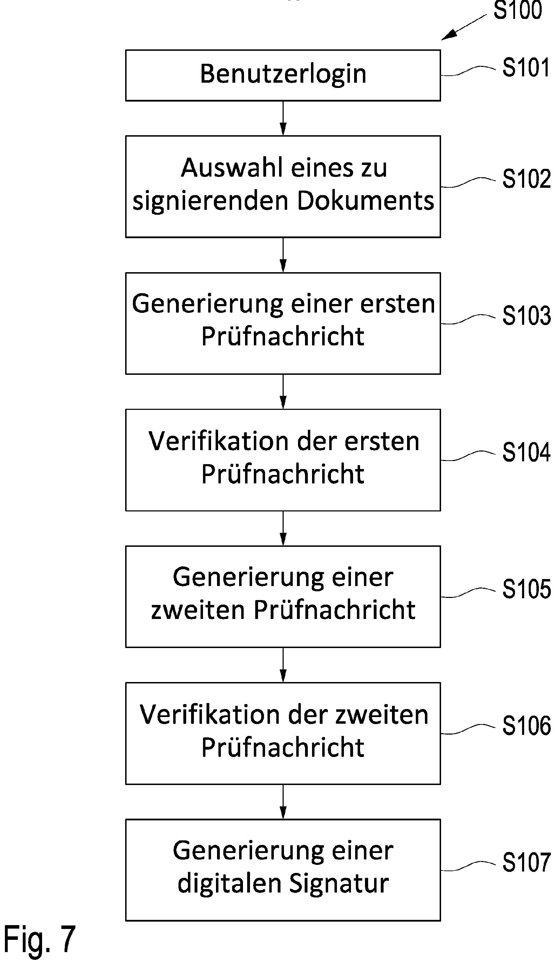

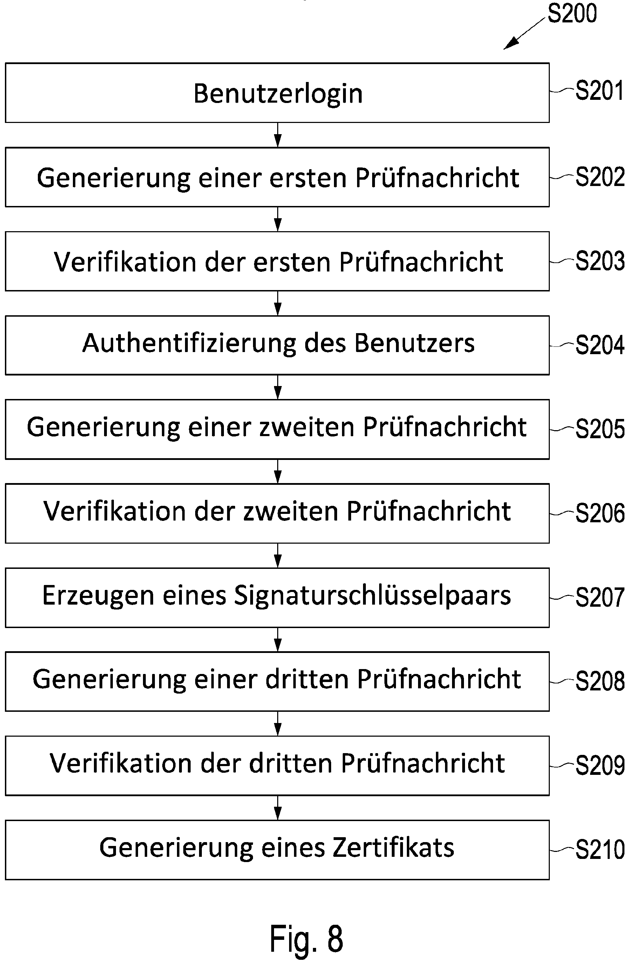

Schließlich sind in den Figuren 7 und 8 die einzelnen Schritte des ersten Ausführungsbeispiels sowie des zweiten Ausführungsbeispiels des erfindungsgemäßen Verfahrens in Form von Flussdiagrammen abgebildet.

### Bezuaszeichenliste

- 10: Sicherheitssystem
- 12: zu signierendes Dokument
- 14: Computer eines Benutzers
- 16: signiertes Dokument
- 18: digitale Signatur
- 20: Computer eines Vertragspartners
- 22a: erste Netzwerk-Einheit
- 22b: zweite Netzwerk-Einheit
- 22c: dritte Netzwerk-Einheit
- 22d: vierte Netzwerk-Einheit
- 24a: erste Prüfnachricht
- 24b: zweite Prüfnachricht
- 24c: dritte Prüfnachricht
- 26: Smartphone des Benutzers
- 28: Barcode
- 30: Identifizierungsdaten
- 32: Hashwert
- 34a: Signatur der ersten Netzwerk-Einheit
- 34b: Signatur der zweiten Netzwerk-Einheit
- 34c: Signatur der dritten Netzwerk-Einheit
- 36: Authentifizierungsdaten
- 37: Signaturschlüssel
- 38: digitales Zertifikat
- 40: öffentlicher Signaturschlüssel des Benutzers
- S100: erfindungsgemäßes Verfahren gemäß einem ersten Ausführungsbeispiel
- S101 - S107: Verfahrensschritte gemäß dem ersten Ausführungsbeispiel
- S200: erfindungsgemäßes Verfahren gemäß einem zweiten Ausführungsbeispiel
- S201 - S210: Verfahrensschritte gemäß dem zweiten Ausführungsbeispiel

## Patentansprüche

1. Verfahren zur sicheren Durchführung einer Fernsignatur eines elektronischen Dokuments (12), wobei das Verfahren die nachfolgenden Schritte aufweist:
- Login eines Benutzers bei einer ersten Netzwerk-Einheit (22a);
- Auswahl eines zu signierenden elektronischen Dokuments (12);
- Generierung einer ersten Prüfnachricht (24a), sofern zuvor die Identität des Benutzers durch den Login bestätigt werden konnte, wobei die erste Prüfnachricht (24a)
- Identifizierungsdaten (30) des Benutzers,
- das zu signierende Dokument (12) bzw. einen aus dem zu signierenden Dokument generierten Hashwert (32), und
- eine digitale Signatur (34a) der ersten Netzwerk-Einheit (22a) aufweist;
- Übertragung der ersten Prüfnachricht (24a) von der ersten NetzwerkEinheit (22a) zu einer zweiten Netzwerk-Einheit (22b);
- Authentifizierung des Benutzers durch die zweite Netzwerk-Einheit (22b), umfassend die folgenden Schritte:
- Überprüfung der Authentizität des Benutzers durch die zweite Netzwerk-Einheit (22b);
- Generierung einer zweiten Prüfnachricht (24b), sofern zuvor die Authentizität des Benutzers durch die zweite Netzwerk-Einheit (22b) bestätigt und die digitale Signatur (34a) der ersten Netzwerk-Einheit (22a) verifiziert werden konnte, wobei die zweite Prüfnachricht (24b) Authentifizierungsdaten (36) des Benutzers, die erste Prüfnachricht (24a) sowie eine digitale Signatur (34b) der zweiten Netzwerk-Einheit (22b) aufweist;
- Übertragung der zweiten Prüfnachricht (24b) von der zweiten Netzwerk-Einheit (22b) zu einer dritten Netzwerk-Einheit (22c);
- Versehen des elektronischen Dokuments (12) mit einer digitalen Signatur (18) des Benutzers, wobei die Signierung des elektronischen Dokuments (12) durch die dritte Netzwerk-Einheit (22c) erfolgt, und zwar dann, wenn zuvor die zweite Prüfnachricht (24b) durch die dritte Netzwerk-Einheit (22c) verifiziert werden konnte, wobei die Verifikation der zweiten Prüfnachricht (24b) die folgenden Schritte umfasst:
- Überprüfung der digitalen Signatur (34b) der zweiten NetzwerkEinheit (22b);
- Überprüfung der digitalen Signatur (34a) der ersten NetzwerkEinheit (22a).

2. Verfahren nach Anspruch 1, **dadurch gekennzeichnet, dass** die Verifikation der zweiten Prüfnachricht (24b) zusätzlich noch eine Überprüfung der Authentifizierungsdaten (36) des Benutzers umfasst.

3. Verfahren nach einem der Ansprüche 1 oder 2, **dadurch gekennzeichnet, dass** die Verifikation der zweiten Prüfnachricht (24b) auch eine Überprüfung der Identifizierungsdaten (30) des Benutzers umfasst.

4. Verfahren nach einem der Ansprüche 1 bis 3, **dadurch gekennzeichnet, dass** die Verifikation der zweiten Prüfnachricht (24b) zusätzlich noch einen Schritt zur Überprüfung der Integrität des zu signierenden Dokuments (12) aufweist.

5. Verfahren nach einem der Ansprüche 1 bis 4, **dadurch gekennzeichnet, dass** die erste (22a), die zweite (22b) und/oder die dritte Netzwerk-Einheit (22c) ein Hardware-Sicherheitsmodul (HSM) aufweisen, wobei bevorzugt sämtliche durch die erste (22a), zweite (22b) und/oder die dritte Netzwerk-Einheit (22c) durchgeführten Verfahrensschritte innerhalb des Hardware-Sicherheitsmodul (HSM) ausgeführt werden.

6. Verfahren nach einem der Ansprüche 1 bis 5, **dadurch gekennzeichnet, dass** die Überprüfung der Authentizität des Benutzers durch die zweite Netzwerk-Einheit (22b) auf Grundlage einer Multi-Faktor-Authentifizierung, insbesondere auf Grundlage einer Zwei-Faktor-Authentifizierung, erfolgt.

7. Verfahren nach einem der Ansprüche 1 bis 6, **dadurch gekennzeichnet, dass** die erste Netzwerk-Einheit (22a) und die zweite Netzwerk-Einheit (22b) voneinander verschieden sind und dass sich der für die digitale Signatur (34a) der ersten Netzwerk-Einheit (22a) verwendete private Schlüssel von dem für die digitale Signatur (34b) der zweiten NetzwerkEinheit (22b) verwendeten privaten Schlüssel unterscheidet.

8. Verfahren nach einem der Ansprüche 1 bis 7, **dadurch gekennzeichnet, dass** die erste Prüfnachricht (24a) und/oder die zweite Prüfnachricht (24b) ein digitales Zertifikat (38) aufweisen, wobei es sich bei dem digitalen Zertifikat (38) insbesondere um ein digitales public-key-Zertifikat handelt.

9. Verfahren nach Anspruch 8, **dadurch gekennzeichnet, dass** das digitale Zertifikat (38) Informationen zum Aussteller des Zertifikats (38), eine Prüfnachricht-ID und/oder eine Hashfunktion aufweist.

10. Verfahren nach einem der Ansprüche 1 bis 9, **dadurch gekennzeichnet, dass** mindestens die erste Prüfnachricht (24a) und/oder die zweite Prüfnachricht (24b) einen Zeitstempel aufweist und dass bevorzugt die Verifikation der ersten (24a) und/oder der zweiten Prüfnachricht (24b) eine Überprüfung des Zeitstempels umfasst.

11. Sicherheitssystem (10) umfassend mindestens eine erste Netzwerk-Einheit (22a), eine zweite Netzwerk-Einheit (22b) und eine dritte Netzwerk-Einheit (22c) mit jeweils einem Prozessor, einem Speicherelement und einem Netzwerkmodul zum Aufbau einer Netzwerkverbindung zwischen der ersten Netzwerk-Einheit (22a), der zweiten Netzwerk-Einheit (22b) und der dritten Netzwerk-Einheit (22c), wobei der Prozessor der ersten Netzwerk-Einheit (22a) dazu ausgelegt ist,
- eine erste Prüfnachricht (24a) zu generieren, wobei die erste Prüfnachricht (24a) Identifizierungsdaten (30) des Benutzers, das zu signierende Dokumente (12) bzw. einen aus dem zu signierenden Dokument generierten Hashwert (32), und eine digitale Signatur (34a) der ersten Netzwerk-Einheit (22a) aufweist;
- die erste Prüfnachricht (24a) unter Verwendung des Netzwerkmoduls von der ersten Netzwerk-Einheit (22a) zu der zweiten Netzwerk-Einheit (22b) zu übertragen; und
der Prozessor der zweiten Netzwerk-Einheit (22b) dazu ausgelegt ist,
- den Benutzer zu authentifizieren, wobei die Authentifizierung die folgenden Schritte umfasst:
- Überprüfung der Authentizität des Benutzers;
- Generierung einer zweiten Prüfnachricht (24b), sofern zuvor die Authentizität des Benutzers durch die zweite Netzwerk-Einheit (22b) bestätigt und die digitale Signatur (34a) der ersten Netzwerk-Einheit (22a) verifiziert werden konnte, wobei die zweite Prüfnachricht (24b) Authentifizierungsdaten (36) des Benutzers, die erste Prüfnachricht (24a) sowie eine digitale Signatur (34b) der zweiten Netzwerk-Einheit (22b) aufweist; und
der Prozessor der dritten Netzwerk-Einheit (22c) dazu ausgelegt ist,
- das elektronische Dokument (12) mit einer digitalen Signatur (18) des Benutzers zu versehen, wobei die Signierung des elektronischen Dokuments (12) nur dann erfolgt, wenn zuvor die zweite Prüfnachricht (24b) durch die dritte Netzwerk-Einheit (22c) verifiziert werden konnte, wobei die Verifikation der zweiten Prüfnachricht (24b) die folgenden Schritte umfasst:
- Überprüfung der digitalen Signatur (34b) der zweiten NetzwerkEinheit (22b);
- Überprüfung der digitalen Signatur (34a) der ersten NetzwerkEinheit (22a).

12. Sicherheitssystem (10) nach Anspruch 11, **dadurch gekennzeichnet, dass** die Verifikation der zweiten Prüfnachricht (24b) zusätzlich noch eine Überprüfung der Authentifizierungsdaten (36) des Benutzers umfasst.

13. Sicherheitssystem (10) nach einem der Ansprüche 11 oder 12, **dadurch gekennzeichnet, dass** die Verifikation der zweiten Prüfnachricht (24b) auch eine Überprüfung der Identifizierungsdaten (30) des Benutzers umfasst.

14. Sicherheitssystem (10) nach einem der Ansprüche 11 bis 13, **dadurch gekennzeichnet, dass** die erste Netzwerk-Einheit (22a), die zweite Netzwerk-Einheit (22b) und/oder die dritte Netzwerk-Einheit (22c) ein Hardware-Sicherheitsmodul (HSM) aufweist, wobei bevorzugt sämtliche durch die erste (22a), zweite (22b) und/oder die dritte Netzwerk-Einheit (22c) durchgeführten Verfahrensschritte innerhalb des Hardware-Sicherheitsmodul (HSM) ausgeführt werden.

15. Verfahren zur sicheren Generierung eines digitalen Zertifikats (38), mit den nachfolgenden Schritten:
- Login eines Benutzers bei einer ersten Netzwerk-Einheit (22a);
- Generierung einer ersten Prüfnachricht (24a), sofern zuvor die Identität des Benutzers bestätigt werden konnte, wobei die erste Prüfnachricht (24a) Identifizierungsdaten (30) des Benutzers und eine digitale Signatur (34a) der ersten Netzwerk-Einheit (22a) aufweist;
- Übertragung der ersten Prüfnachricht (24a) von der ersten NetzwerkEinheit (22a) zu einer zweiten Netzwerk-Einheit (22b); und
- Authentifizierung des Benutzers durch die zweite Netzwerk-Einheit (22b), umfassend die folgenden Schritte:
- Überprüfung der Authentizität des Benutzers durch die zweite Netzwerk-Einheit (22b);
- Generierung einer zweiten Prüfnachricht (24b) durch die zweite Netzwerk-Einheit (22b), sofern zuvor die Authentizität des Benutzers durch die zweite Netzwerk-Einheit (22b) bestätigt und die digitale Signatur (34a) der ersten Netzwerk-Einheit (22a) verifiziert werden konnte, wobei die zweite Prüfnachricht (24b) Authentifizierungsdaten (36) des Benutzers, die erste Prüfnachricht (24a) sowie eine digitale Signatur (34b) der zweiten NetzwerkEinheit (22b) aufweist;
- Übertragung der zweiten Prüfnachricht (24b) von der zweiten Netzwerk-Einheit (22b) zu einer dritten Netzwerk-Einheit (22c);
- Generierung eines Schlüsselpaars, das einen privaten und einen öffentlichen Schlüssel () aufweist, durch die dritte Netzwerk-Einheit (22c) für die digitale Signatur von elektronischen Dokumenten (12), und zwar dann, wenn zuvor die zweite Prüfnachricht (24b) durch die dritte Netzwerk-Einheit (22c) verifiziert werden konnte, wobei die Verifikation der zweiten Prüfnachricht (24b) die folgenden Schritte umfasst:
- Überprüfung der digitalen Signatur (34b) der zweiten NetzwerkEinheit (22b);
- Überprüfung der digitalen Signatur (34a) der ersten NetzwerkEinheit (22a); sowie
- Generierung einer dritten Prüfnachricht (24c) durch die dritte Netzwerk-Einheit (22c), wobei die dritte Prüfnachricht (24c) den öffentlichen Schlüssel (40), die zweite Prüfnachricht (24b) und eine Signatur (34c) der dritten Netzwerk-Einheit (22c) aufweist; und
- Übertragung der dritten Prüfnachricht (24c) von der dritten NetzwerkEinheit (22c) zu einer vierten Netzwerk-Einheit (22d);
- Ausstellung eines digitalen Zertifikats (38) für den Benutzer durch die vierte Netzwerk-Einheit (22d), sofern zuvor die dritte Prüfnachricht (24c) durch die vierte Netzwerk-Einheit (22d) verifiziert werden konnte, wobei die Verifikation der dritten Prüfnachricht (24c) die Überprüfung der digitalen Signaturen (34a, 34b, 34c) der ersten (22a), der zweiten (22b) und der dritten Netzwerk-Einheit (22c) umfasst.

## Claims

1. A method for secure conduction of a remote signature of an electronic document (12), the method comprising the following steps:
- login of a user to a first network unit (22a);
- selecting an electronic document (12) to be signed;
- generating a first verification message (24a), provided that the identity of the user could be confirmed by the login beforehand,
the first verification message (24a) including
- identification data (30) of the user,
- the document (12) to be signed or a hash value (32) generated from the document to be signed, and
- a digital signature (34a) of the first network unit (22a);
- transmitting the first verification message (24a) from the first network unit (22a) to a second network unit (22b);
- authenticating the user by the second network unit (22b), comprising the following steps:
- checking the authenticity of the user by the second network unit (22b);
- generating a second verification message (24b), provided that the authenticity of the user could be confirmed by the second network unit (22b) and the digital signature (34a) of the first network unit (22a) could be verified beforehand, the second verification message (24b) including authentication data (36) of the user, the first verification message (24a), and a digital signature (34b) of the second network unit (22b);
- transmitting the second verification message (24b) from the second network unit (22b) to a third network unit (22c);
- providing the electronic document (12) with a digital signature (18) of the user, wherein signing of the electronic document (12) is performed by the third network unit (22c) if the second verification message (24b) could be verified by the third network unit (22c) beforehand, the verification of the second verification message (24b) comprising the following steps:
- checking the digital signature (34b) of the second network unit (22b);
- checking the digital signature (34a) of the first network unit (22a).

2. The method according to claim 1, **characterized in that** the verification of the second verification message (24b) additionally comprises checking the authentication data (36) of the user.

3. The method according to one of claims 1 or 2, **characterized in that** the verification of the second verification message (24b) also comprises checking of identification data (30) of the user.

4. The method according to any one of claims 1 to 3, **characterized in that** the verification of the second verification message (24b) additionally comprises a step for checking the integrity of the document (12) to be signed.

5. The method according to any one of claims 1 to 4, **characterized in that** the first (22a), the second (22b), and/or the third network unit (22c) include a hardware security module (HSM), wherein preferably all method steps performed by the first (22a), the second (22b), and/or the third network unit (22c) are executed within the hardware module (HSM).

6. The method according to any one of claims 1 to 5, **characterized in that** checking the authenticity of the user by the second network unit (22b) is performed on the basis of a multi-factor authentication, in particular on the basis of a two-factor authentication.

7. The method according to any one of claims 1 to 6, **characterized in that** the first network unit (22a) and the second network unit (22b) are different and that the private key used for the digital signature (34a) of the first network unit (22a) is different from the private key used for the digital signature (34b) of the second network unit (22b).

8. The method according to any one of claims 1 to 7, **characterized in that** the first verification message (24a) and/or the second verification message (24b) include a digital certificate (38), the digital certificate (38) being a digital public-key certificate, in particular.

9. The method according to claim 8, **characterized in that** the digital certificate (38) includes information on the issuer of the certificate (38), a verification message ID and/or a hash function.

10. The method according to any one of claims 1 to 9, **characterized in that** at least the first verification message (24a) and/or the second verification message (24b) have a time stamp, and that preferably the verification of the first (24a) and/or the second verification message (24b) includes checking the time stamp.

11. A security system (10) comprising at least a first network unit (22a), a second network unit (22b), and a third network unit (22c), each having a processor, a storage element, and a network module for establishing a network connection between the first network unit (22a), the second network unit (22b), and the third network unit (22c), the processor of the first network unit (22a) being configured to
- generate a first verification message (24a), the first verification message (24a) including identification data (30) of the user, the document (12) to be signed or a hash value (32) generated from the document to be signed, respectively, and a digital signature (34a) of the first network unit (22a);
- transmit the first verification message (24a) by using the network module of the first network unit (22a) to the second networking unit (22b); and
the processor of the second networking unit (22b) being configured to
- authenticate the user, the authentication comprising the following steps:
- checking the authenticity of the user;
- generating a second verification message (24b), provided that the authenticity of the user could be configured by the second network unit (22b) and the digital signature (34a) of the first network unit (22a) could be verified beforehand, the second verification message (24b) including authentication data (36) of the user, the first verification message (24a) and a digital signature (34b) of the second network unit (22b); and
the processor of the third networking unit (22c) being configured to
- provide the electronic document (12) with a digital signature (18) of the user, wherein signing of the electronic document (12) is only performed if the second verification message (24b) could be verified by the third network unit (22c) beforehand, the verification of the second verification message (24b) comprising the following steps:
- checking the digital signature (34b) of the second network unit (22b);
- checking the digital signature (34a) of the first networking unit (22a).

12. The security system (10) according to claim 11, **characterized in that** the verification of the second verification message (24b) additionally comprises checking the authentication data (36) of the user.

13. The security system (10) according to one of claims 11 or 12, **characterized in that** the verification of the second verification message (24b) also comprises checking the identification data (30) of the user.

14. The security system (10) according to any one of claims 11 to 13, **characterized in that** the first network unit (22a), the second networking unit (22b), and/or the third network unit (22c) include a hardware security module (HSM), wherein preferably all method steps performed by the first (22a), the second (22b), and/or the third network unit (22c) are executed within the hardware security module (HSM).

15. A method for secure generation of a digital certificate (38), comprising the following steps:
- login of a user to a first network unit (22a);
- generating a first verification message (24a), provided that the identity of the user could be confirmed beforehand, the first verification message (24a) including identification data (30) of the user and a digital signature (34a) of the first network unit (22a);
- transmitting the first verification message (24a) from the first network unit (22a) to a second network unit (22b); and
- authenticating the user by the second network unit (22b), comprising the following steps:
- checking the authenticity of the user by the second network unit (22b);
- generating a second verification message (24b), provided that the authenticity of the user could be confirmed by the second network unit (22b) and the digital signature (34a) of the first network unit (22a) could be verified beforehand, the second verification message (24b) including authentication data (36) of the user, the first verification message (24a) and a digital signature (34b) of the second network unit (22b);
- transmitting the second verification message (24b) from the second network unit (22b) to a third network unit (22c);
- generating a key pair including a private and a public key (40) by the third network unit (22c) for the digital signature of electronic documents (12), if the second verification message (24b) could be verified by the third network unit (22c) beforehand, the verification of the second verification message (24b) comprising the following steps:
- checking the digital signature (34b) of the second network unit (22b);
- checking the digital signature (34a) of the first network unit (22a); and
- generating a third verification message (24c) by the third network unit (22c), the third verification message (24c) including the public key (40), the second verification message (24b), and a signature (34c) of the third network unit (22c); and
- transmitting the third verification message (24c) from the third network unit (22c) to a fourth network unit (22d);
- issuing a digital certificate (38) for the user by the fourth networking unit (22d), provided that the third verification message (24c) could be verified by the fourth network unit (22d) beforehand, the verification of the third verification message (24c) comprising checking the digital signatures (34a, 34b, 34c) of the first (22a), the second (22b), and the third network unit (22c).

## Revendications

1. Procédé de mise en oeuvre sécurisée d'une signature à distance d'un document électronique (12), le procédé comprenant les étapes suivantes :
- connexion d'un utilisateur à une première unité de réseau (22a) ;
- sélection d'un document électronique (12) à signer ;
- génération d'un premier message de test (24a), à condition que l'identité de l'utilisateur ait pu être préalablement confirmée par la connexion, le premier message de test (24a) comprenant
- les données d'identification (30) de l'utilisateur,
- le document à signer (12) ou une valeur de hachage (32) générée à partir du document à signer, et
- une signature numérique (34a) de la première unité de réseau (22a) ;
- transmission du premier message de test (24a) de la première unité de réseau (22a) à une deuxième unité de réseau (22b) ;
- authentification de l'utilisateur par la deuxième unité de réseau (22b), comprenant les étapes suivantes :
- vérification de l'authenticité de l'utilisateur par la deuxième unité de réseau (22b) ;
- génération d'un deuxième message de test (24b), à condition que l'authenticité de l'utilisateur ait pu être préalablement confirmée par la deuxième unité de réseau (22b) et que la signature numérique (34a) de la première unité de réseau (22a) ait pu être vérifiée, le deuxième message de test (24b) comprenant des données d'authentification (36) de l'utilisateur, le premier message de test (24a) et une signature numérique (34b) de la deuxième unité de réseau (22b) ;
- transmission du deuxième message de test (24b) de la deuxième unité de réseau (22b) à une troisième unité de réseau (22c) ;
- apposition d'une signature numérique (18) de l'utilisateur sur le document électronique (12), le document électronique (12) étant signé par la troisième unité de réseau (22c) si le deuxième message de test (24b) a pu être préalablement vérifié par la troisième unité de réseau (22c), la vérification du deuxième message de test (24b) comprenant les étapes suivantes :
- vérification de la signature numérique (34b) de la deuxième unité de réseau (22b) ;
- vérification de la signature numérique (34a) de la première unité de réseau (22a).

2. Procédé selon la revendication 1, **caractérisé en ce que** la vérification du deuxième message de test (24b) comprend également une vérification des données d'authentification de l'utilisateur (36).

3. Procédé selon l'une des revendications 1 ou 2, **caractérisé en ce que** la vérification du deuxième message de test (24b) comprend également une vérification des données d'identification (30) de l'utilisateur.

4. Procédé selon l'une des revendications 1 à 3, **caractérisé en ce que** la vérification du deuxième message de test (24b) comprend également une étape de vérification de l'intégrité du document (12) à signer.

5. Procédé selon l'une des revendications 1 à 4, **caractérisé en ce que** la première (22a), la deuxième (22b) et/ou la troisième unité de réseau (22c) comprennent un module matériel de sécurité (HSM), toutes les étapes de procédé étant de préférence exécutées par la première (22a), la deuxième (22b) et/ou la troisième unité de réseau (22c) dans le module matériel de sécurité (HSM).

6. Procédé selon l'une des revendications 1 à 5, **caractérisé en ce que** l'authenticité de l'utilisateur est vérifiée par la deuxième unité de réseau (22b) sur la base d'une authentification multifacteur, notamment sur la base d'une authentification à double facteur.

7. Procédé selon l'une des revendications 1 à 6, **caractérisé en ce que** la première unité de réseau (22a) et la deuxième unité de réseau (22b) sont différentes l'une de l'autre et **en ce que** la clé privée utilisée pour la signature numérique (34a) de la première unité de réseau (22a) diffère de la clé privée utilisée pour la signature numérique (34b) de la deuxième unité de réseau (22b).

8. Procédé selon l'une des revendications 1 à 7, **caractérisé en ce que** le premier message de test (24a) et/ou le deuxième message de test (24b) comprennent un certificat numérique (38), le certificat numérique (38) étant notamment un certificat numérique de clé publique.

9. Procédé selon la revendication 8, **caractérisé en ce que** le certificat numérique (38) comprend des informations sur l'émetteur du certificat (38), un identifiant de message de test et/ou une fonction de hachage.

10. Procédé selon l'une des revendications 1 à 9, **caractérisé en ce qu'**au moins le premier message de test (24a) et/ou le deuxième message de test (24b) comprennent un horodatage et que, de préférence, la vérification du premier (24a) et/ou du deuxième message de test (24b) comprend un examen de l'horodatage.

11. Système de sécurité (10) comprenant au moins une première unité de réseau (22a), une deuxième unité de réseau (22b) et une troisième unité de réseau (22c), chacune avec un processeur, un élément de mémoire et un module de réseau pour établir une connexion réseau entre la première unité de réseau (22a), la deuxième unité de réseau (22b) et la troisième unité de réseau (22c), le processeur de la première unité de réseau (22a) étant configuré pour
- générer un premier message de test (24a), le premier message de test (24a) comprenant des données d'identification (30) de l'utilisateur, les documents à signer (12) ou une valeur de hachage (32) générée à partir du document à signer, et une signature numérique (34a) de la première unité de réseau (22a) ;
- transmettre le premier message de test (24a) à l'aide du module de réseau de la première unité de réseau (22a) à la deuxième unité de réseau (22b) ; et
le processeur de la deuxième unité de réseau (22b) est configuré pour
- authentifier l'utilisateur, l'authentification comprenant les étapes suivantes :
- vérification de l'authenticité de l'utilisateur ;
- génération d'un deuxième message de test (24b), à condition que l'authenticité de l'utilisateur ait pu être préalablement confirmée par la deuxième unité de réseau (22b) et que la signature numérique (34a) de la première unité de réseau (22a) ait pu être vérifiée, le deuxième message de test (24b) comprenant des données d'authentification (36) de l'utilisateur, le premier message de test (24a) et une signature numérique (34b) de la deuxième unité de réseau (22b) ; et
le processeur de la troisième unité de réseau (22c) est configuré pour
- apposer une signature numérique (18) de l'utilisateur sur le document électronique (12), le document électronique (12) n'étant signé que si le deuxième message de test (24b) a pu être préalablement vérifié par la troisième unité de réseau (22c), la vérification du deuxième message de test (24b) comprenant les étapes suivantes :
- vérification de la signature numérique (34b) de la deuxième unité de réseau (22b) ;
- vérification de la signature numérique (34a) de la première unité de réseau (22a).

12. Système de sécurité (10) selon la revendication 11, **caractérisé en ce que** la vérification du deuxième message de test (24b) comprend également une vérification des données d'authentification (36) de l'utilisateur.

13. Système de sécurité (10) selon l'une des revendications 11 ou 12, **caractérisé en ce que** la vérification du deuxième message de test (24b) comprend également une vérification des données d'identification (30) de l'utilisateur.

14. Système de sécurité (10) selon l'une des revendications 11 à 13, **caractérisé en ce que** la première unité de réseau (22a), la deuxième unité de réseau (22b) et/ou la troisième unité de réseau (22c) comprennent un module matériel de sécurité (HSM), toutes les étapes de procédé étant de préférence exécutées par la première (22a), la deuxième (22b) et/ou la troisième unité de réseau (22c) dans le module matériel de sécurité (HSM).

15. Processus de génération sécurisée d'un certificat numérique (38), comprenant les étapes suivantes :
- connexion d'un utilisateur à une première unité de réseau (22a) ;
- génération d'un premier message de test (24a), à condition que l'identité de l'utilisateur ait pu être préalablement confirmée, le premier message de test (24a) comprenant des données d'identification (30) de l'utilisateur et une signature numérique (34a) de la première unité de réseau (22a) ;
- transmission du premier message de test (24a) de la première unité de réseau (22a) à une deuxième unité de réseau (22b) ; et
- authentification de l'utilisateur par la deuxième unité de réseau (22b), comprenant les étapes suivantes :
- vérification de l'authenticité de l'utilisateur par la deuxième unité de réseau (22b) ;
- génération d'un deuxième message de test (24b) par la deuxième unité de réseau (22b), à condition que l'authenticité de l'utilisateur ait pu être préalablement confirmée par la deuxième unité de réseau (22b) et que la signature numérique (34a) de la première unité de réseau (22a) ait pu être vérifiée, le deuxième message de test (24b) comprenant des données d'authentification (36) de l'utilisateur, le premier message de test (24a) et une signature numérique (34b) de la deuxième unité de réseau (22b) ;
- transmission du deuxième message de test (24b) de la deuxième unité de réseau (22b) à une troisième unité de réseau (22c) ;
- génération d'une paire de clés, qui comprend une clé privée et une clé publique (), par la troisième unité de réseau (22c) pour la signature numérique de documents électroniques (12), lorsque le deuxième message de test (24b) a pu être préalablement vérifié par la troisième unité de réseau (22c), la vérification du deuxième message de test (24b) comprenant les étapes suivantes :
- vérification de la signature numérique (34b) de la deuxième unité de réseau (22b) ;
- vérification de la signature numérique (34a) de la première unité de réseau (22a) ; et
- génération d'un troisième message de test (24c) par la troisième unité de réseau (22c), le troisième message de test (24c) comprenant la clé publique (40), le deuxième message de test (24b) et une signature (34c) de la troisième unité de réseau (22c) ; et
- transmission du troisième message de test (24c) de la troisième unité de réseau (22c) à une quatrième unité de réseau (22d) ;
- délivrance d'un certificat numérique (38) pour l'utilisateur par la quatrième unité de réseau (22d), à condition que le troisième message de test (24c) ait pu être préalablement vérifié par la quatrième unité de réseau (22d), la vérification du troisième message de test (24c) comprenant la vérification des signatures numériques (34a, 34b, 34c) de la première (22a), de la deuxième (22b) et de la troisième unité de réseau (22c).
